# EUROPEAN PATENT APPLICATION

(11) **EP 2 492 161 A1**
(43) Date of publication of application: **29.08.2012**
(21) Application number: 09846317.7
(22) Date of filing: 22.10.2009
(51) Int. Cl.: B60W 10/08, B60K 6/48, B60K 6/547, B60W 10/10, B60W 20/00

(54) **CONTROLLER OF VEHICLE**

(71) Applicant: Toyota Jidosha Kabushiki Kaisha, Toyota-shi, Aichi 471-8571 (JP)
(72) Inventor: MURAKAMI, Koji, Toyota-shi Aichi 471-8571 (JP); NAKAO, Hatsuo, Toyota-shi Aichi 471-8571 (JP); ITO, Koji, Toyota-shi Aichi 471-8571 (JP); MIYASHITA, Michihiro, Toyota-shi Aichi 471-8571 (JP)
(74) Representative: Intès, Didier Gérard André
(86) International application number: PCT/JP2009/005568
(87) International publication number: WO 2011/048636

(57) **Abstract**

A vehicle control apparatus comprises an engine (10); a manual transmission (30); a motor/generator (20); and a shift operation apparatus (81) that includes shift positions for every shift stages in order to select the shift stage by the manual transmission (30) upon the travel in a driving mode using the output from the engine (10), and a driving mode selecting position of the motor/generator (20) for selecting a driving mode in which the vehicle travels only with the output from the motor/generator (20), and that operates the manual transmission (30) according to the shift position selected by a driver or the driving mode selecting position, wherein when it is estimated that the changeover from the driving mode using only the output from the motor/generator (20) to the driving mode using the output from the engine (10) is performed, the motor/generator (20) is driven for power driving to generate driving force, when an accelerator is turned off.

## Description

### Field

The present invention relates to a vehicle control apparatus including a mechanical power source using mechanical energy as power, an electric power source using mechanical energy, which is obtained by converting electric energy, as power, and a manual transmission having plural shift stages.

### Background

There has conventionally been known a hybrid vehicle provided with a stepped manual transmission in which shift stages are changed by a driver's operation on a shift operation apparatus and a clutch pedal. The shift operation apparatus is an operation apparatus of a vehicle provided with a manual transmission, which is generally known and has a select lever that is used when a driver selects a desired shift stage, and a select position for every shift stage. For example, the Patent Literature 1 described below discloses a hybrid vehicle provided with the manual transmission of this type. In the hybrid vehicle in the Patent Literature 1, a driver performs the changeover between an engine driving mode (an engine driving mode using only driving force of an engine that is a mechanical power source) and an EV driving mode (a motor driving mode using only driving force of a motor that is an electric power source). Therefore, a select position for selecting the EV driving mode is also provided to the shift operation apparatus in the hybrid vehicle. When the select position of any one of the shift stages is selected, the hybrid vehicle drives in the engine driving mode, while when the select position for the EV driving mode is selected, it drives with the EV driving mode.

The Patent Literature 2 described below discloses a hybrid vehicle, which includes a clutch between an engine and a stepped automatic transmission, and in which the automatic transmission performs a shift operation when a control unit disengages the clutch. This Patent Literature 2 also discloses a technique of automatically reducing a throttle opening and increasing a driving torque of a motor, in synchronism with the disengagement of the clutch, in order to prevent engine blow, by which a generation of a deceleration feeling caused by the disengagement of the clutch is avoided.

### Citation List

### Patent Literature

Patent Literature 1: Japanese Laid-open Patent Publication No. 2005-028968
Patent Literature 2: Japanese Laid-open Patent Publication No. 11-069509

### Summary

### Technical Problem

When the mode is changed from the EV driving mode to the engine driving mode in the hybrid vehicle described in the Patent Literature 1, a driver releases his/her foot from an accelerator pedal and disengages a clutch by a depressing operation of a clutch pedal, whereby the select lever of the shift operation apparatus is moved to the select position of the desired shift stage from the select position for the EV driving mode. Then, the driver finally releases his/her foot from the clutch pedal so as to engage the clutch. Due to the series of driver operations during the changeover, the motor stops the output of the driving force (power running), and the driving force of the engine cannot be transmitted to the wheels until the clutch is engaged, in the hybrid vehicle described above. Accordingly, in the hybrid vehicle described above, a lack of driving force occurs upon the changeover from the EV driving mode to the engine driving mode.

In view of this, the present invention aims to provide a technique of suppressing a lack of driving force upon the changeover from the EV driving mode to the driving mode using an engine in a vehicle control apparatus including a stepped manual transmission, and an apparatus for manually performing a changeover between a driving mode using the engine and an EV driving mode.

### Solution to Problem

To achieve the object as described above, according to the present invention, a vehicle control apparatus includes a mechanical power source that generates driving force by using mechanical energy as power, a manual transmission to which an output of the mechanical power source is input, an electric power source that generates driving force by using mechanical energy, which is formed by converting electric energy, as power, and a shift operation apparatus that includes shift positions for every shift stages in order to select the shift stage by the manual transmission upon the travel in a driving mode using the output from the mechanical power source, and a driving mode selecting position of the electric power source for selecting a driving mode in which the vehicle travels only with the output from the electric power source, and that operates the manual transmission according to the shift position selected by a driver or the driving mode selecting position, wherein when it is estimated that the changeover from the driving mode using only the output from the electric power source to the driving mode using the output from the mechanical power source is performed, the electric power source is driven for power running to generate driving force, when an accelerator is turned off.

Here, when it is estimated that the changeover from the driving mode using only the output from the electric power source to the driving mode using the output from the mechanical power source is performed, the electric power source is desirably driven for power running to generate driving force during the operation of changing the driving mode.

Further, desirably a clutch between the mechanical power source and the manual transmission is released during the operation of changing the driving mode.

Further, desirably the estimation as to whether the changeover from the driving mode using only the output from the electric power source to the driving mode using the output from the mechanical power source is performed is made according to the difference between a requested vehicle driving force involved with an acceleration operation of a driver and an actual vehicle driving force according to the output from the electric power source.

Desirably, the estimation as to whether the changeover from the driving mode using only the output from the electric power source to the driving mode using the output from the mechanical power source is performed is made according to changeover guiding information that promotes the changeover of the driving mode to a driver from the vehicle.

### Advantageous Effects of Invention

When it is estimated that the changeover from a driving mode using only an output from an electric power source to a driving mode using an output of a mechanical power source is performed, the vehicle control apparatus according to the present invention drives the electric power source for power driving when an accelerator is in off-state. Specifically, when the estimation described above is made, driving force is produced to the vehicle by the electric power source during the changeover operation of the driving mode by a driver started with the off-state of the accelerator. Thus, the control apparatus can avoid the situation in which the driving force cannot be transmitted to the vehicle due to the off-state of the accelerator, thereby being capable of preventing the lack of driving force during the changeover operation of the driving mode. Further, the control apparatus can avoid the situation in which the driving force is not generated upon the start of the changeover operation of the driving mode, and the driving force is restarted upon the completion of the changeover operation, thereby being capable of suppressing the generation of shock during the changeover operation of the driving mode.

### Brief Description of Drawings

FIG. 1 is a diagram illustrating a configuration of a vehicle control apparatus according to the present invention.
FIG. 2 is a view illustrating one example of a shift operation apparatus and an EV driving mode changeover apparatus, when a neutral condition is selected.
FIG. 3 is a view illustrating one example of a shift operation apparatus and an EV driving mode changeover apparatus, when an EV driving mode is selected.
FIG. 4 is a time chart illustrating a motor vehicle driving force, an engine vehicle driving force, actual vehicle driving force, and required vehicle driving force, when the mode is changed from the EV driving mode to a hybrid driving mode upon the reduction in SOC amount.
FIG. 5 is a flowchart describing an operation of estimating a driver's intention of changing the driving mode.
FIG. 6 is a flowchart describing another operation of estimating a driver's intention of changing the driving mode.
FIG. 7 is a flowchart describing a driving mode changeover control.
FIG. 8 is another example of a time chart illustrating a motor vehicle driving force, engine vehicle driving force, actual vehicle driving force, and required vehicle driving force when the mode is changed from the EV driving mode to the hybrid driving mode upon the reduction in SOC amount.
FIG. 9 is a view illustrating another hybrid vehicle to which the control apparatus according to the present invention is to be applied.

### Description of Embodiments

An embodiment of a vehicle control apparatus according to the present invention will be described in detail with reference to the drawings. It is to be noted that the present invention is not limited by the embodiment.

### Embodiment

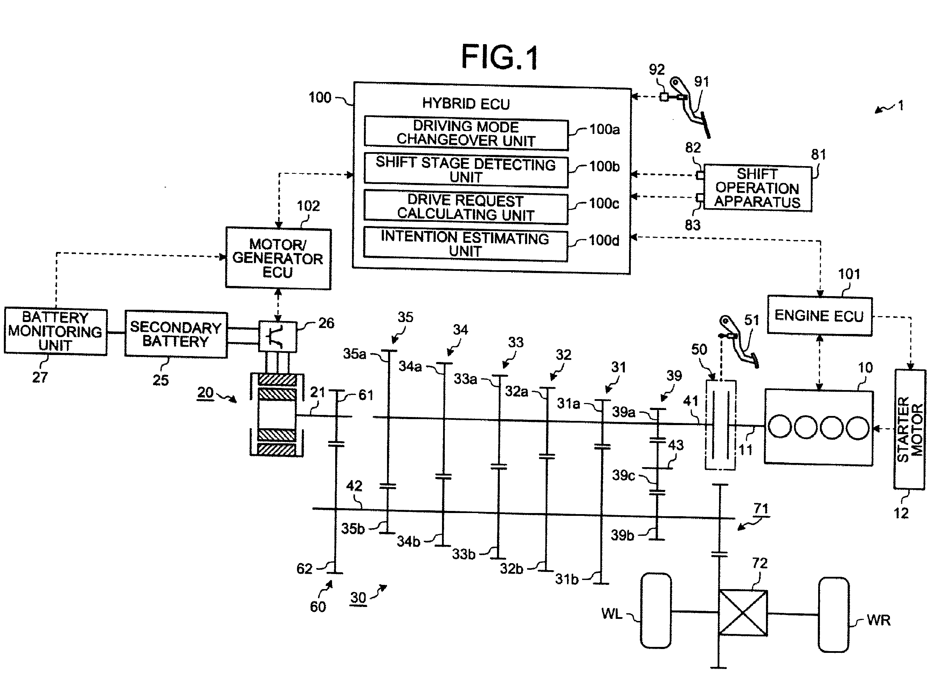

An embodiment of the vehicle control apparatus according to the present invention will be described with reference to FIGS. 1 to 9.

A hybrid vehicle, which is a subject to which the control apparatus according to the present invention is to be applied, includes a mechanical power source using mechanical energy as power, an electric power source using mechanical energy obtained by converting electric energy as power, a manual transmission having plural shift stages, and an apparatus for performing a changeover between two driving modes (a mode for generating driving force only by the power of the mechanical power source and a mode for generating driving force only by the power of the electric power source) with a manual operation.

Firstly, one example of the hybrid vehicle will be described with reference to FIG. 1. A reference numeral 1 in FIG. 1 denotes a hybrid vehicle according to the present embodiment.

The hybrid vehicle 1 includes an engine 10 that outputs mechanical power (engine torque) from an output shaft (crankshaft) 11 as a mechanical power source. An internal combustion engine or an external combustion engine may be employed as the engine 10. The operation of the engine 10 is controlled by an engine control unit of an electronic control unit (hereinafter referred to as "engine ECU") 101 for the engine. The engine 10 is provided with a starter motor 12 that is controlled to be driven upon the start by the engine ECU 101.

The hybrid vehicle 1 also includes, as an electric power source, a motor, a generator that can perform power driving, or a motor/generator that can perform both a power driving and regenerative driving. Here, a motor/generator 20 will be described as one example. The motor/generator 20 is configured as a permanent-magnet AC synchronous motor, wherein the operation thereof is controlled by an electronic control unit (hereinafter referred to as "motor/generator ECU") 102 for the motor/generator. Upon the power driving, it functions as a motor (electric motor), wherein it converts the electric energy supplied through a secondary battery 25 and an inverter 26 into mechanical energy, and outputs mechanical power (motor power driving torque) from an output shaft 21. On the other hand, upon the regenerative driving, it functions as a generator (generator), wherein it converts the mechanical energy into electric energy when the mechanical power (motor regenerative torque) is input from the output shaft 21, and stores the resultant in the secondary battery 25 as electric power through the inverter 26.

The hybrid vehicle 1 is provided with a battery monitoring unit 27 that detects the state of charge (SOC) of the secondary battery 25. The battery monitoring unit 27 transmits a signal involved with the detected state of charge of the secondary battery 25 (in other words, a signal involved with an amount of state of charge (SOC amount)) to the motor/generator ECU 102. The motor/generator ECU 102 is provided with a battery control unit that determines the state of charge of the secondary battery 25 on the basis of the signal so as to determine whether the secondary battery 25 should be charged or not.

The hybrid vehicle 1 is also provided with a power transmission apparatus including a stepped manual transmission 30, etc. The power transmission apparatus transmits the power (engine torque or motor power driving torque) of the engine 10 or the motor/generator 20 to driving wheels WL and WR.

An input shaft 41 to which the engine torque is input and an output shaft 42 that is arranged parallel to the input shaft 41 with a space for outputting torque to the driving wheels WL and WR are provided to the manual transmission 30.

The engine torque is input to the input shaft 41 through a clutch 50. The clutch 50 is a so-called friction clutch apparatus that is configured to be capable of performing a changeover between an engagement state in which the output shaft 11 of the engine 10 and the input shaft 41 are engaged with each other and a release state (disengagement state) in which the engagement state between the output shaft 11 and the input shaft 41 is released (disengaged). The engagement state described here means the state in which the transmission of torque can be made between the output shaft 11 and the input shaft 41, while the release state (disengagement state) means the state in which the transmission of the torque is not made between the output shaft 11 and the input shaft 41. The changeover operation of the engagement state and the release state in the clutch 50 is mechanically executed through the driver's operation on a clutch pedal 51 via a link mechanism or a wire.

In the present embodiment, the motor/generator 20 is coupled to the output shaft 42 through a pair of gears 60. The pair of gears 60 includes a first gear 61 and a second gear 62, which are meshed with each other. The first gear 61 is mounted so as to rotate integrally with the output shaft 21 of the motor/generator 20. On the other hand, the second gear 62 is formed to have a diameter larger than that of the first gear 61, and mounted so as to rotate integrally with the output shaft 42 of the manual transmission 30. With this configuration, the pair of gears 60 operates as a speed reducing apparatus when the torque is input from the output shaft 21 of the motor/generator 20, while operates as a speed increasing apparatus when rotation torque is input from the output shaft 42 of the manual transmission 30. Therefore, when the motor/generator 20 is driven for power driving, the motor power driving torque is transmitted to the manual transmission 30 through the pair of gears 60 serving as the speed reducing apparatus. On the other hand, when the motor/generator 20 is driven for regeneration, the output torque is transmitted to a rotor of the motor/generator 20 from the output shaft 42 of the manual transmission 30 through the pair of gears 60 serving as the speed increasing apparatus. It is supposed that the pair of gears 60 is meshed with each other, even when a later-described shift lever 81a is located at any position on a shift gauge 81b, i.e., at shift positions 1 to 5, R, EV driving mode selecting position EV, or a neutral position.

The manual transmission 30 illustrated here has shift stages that are forward five stages and reverse one stage. Specifically, it includes a first-speed gear stage 31, a second-speed gear stage 32, a third-speed gear stage 33, a fourth-speed gear stage 34, and a fifth-speed gear stage 35 as the forward shift stages, and a reverse gear stage 39 as the reverse shift stage. The forward shift stages are configured such that the gear ratio is reduced in the order of the first-speed gear stage 31, the second-speed gear stage 32, the third-speed gear stage 33, the fourth-speed gear stage 34, and the fifth-speed gear stage 35. FIG. 1 briefly illustrates the configuration of the manual transmission 30, so that the arrangement of the respective shift stages is not always made as in the configuration in FIG. 1.

In the power transmission apparatus according to the present embodiment, when the clutch 50 is brought into the engagement state, the engine torque input to the input shaft 41 is shifted by any one of the shift stages (gear stages 31 to 35) to be transmitted to the output shaft 42. In the power transmission apparatus, the motor power driving torque is transmitted to the output shaft 42 through the pair of gears 60. In the power transmission apparatus, the torque output from the output shaft 42 is decelerated by a final decelerating mechanism 71, and transmitted to the driving wheels WL and WR through a differential mechanism 72 as driving force.

The first-speed gear stage 31 is made of a pair of gears that is a first-speed drive gear 31a and a first-speed driven gear 31b, which are meshed with each other. The first-speed drive gear 31a is arranged on the input shaft 41, while the first-speed driven gear 31b is arranged on the output shaft 42. The second-speed gear stage 32 to the fifth-speed gear stage 35 also include a second-speed drive gear 32a to fifth-speed drive gear 35a and a second-speed driven gear 32b to a fifth-speed driven gear 35b, like the first-speed gear stage 31.

On the other hand, the reverse gear stage 39 includes a reverse drive gear 39a, a reverse driven gear 39b, and a reverse intermediate gear 39c. The reverse drive gear 39a is arranged on the input shaft 41, while the reverse driven gear 39b is arranged on the output shaft 42. The reverse intermediate gear 39c is meshed with the reverse drive gear 39a and the reverse driven gear 39b, and arranged on a rotation shaft 43.

In the manual transmission 30, any one of the drive gears of the respective shift stages is arranged so as to rotate integrally with the input shaft 41, while the remaining drive gears are arranged so as to rotate relative to the input shaft 41. Any one of the driven gears of the respective shift stages is arranged so as to rotate integrally with the output shaft 42, while the remaining gears are arranged so as to rotate relative to the output shaft 42.

A sleeve (not illustrated) that moves in the axial direction with the driver's shift operation is arranged at the input shaft 41 and the output shaft 42. The sleeve on the input shaft 41 is arranged between the drive gears of two shift stages, which can rotate relative to the input shaft 41. On the other hand, the sleeve on the output shaft 42 is arranged between the driven gears of two shift stages, which can rotate relative to the output shaft 42. This sleeve moves in the axial direction via an unillustrated link mechanism or fork coupled to a shift operation apparatus 81, when the driver operates the shift operation apparatus 81. The moved sleeve rotates the drive gear and the driven gear, which are located in the direction of the movement and can relatively rotate, integrally with the input shaft 41 and the output shaft 42. In the manual transmission 30, the sleeve moves in the direction corresponding to the driver's shift operation by the shift operation apparatus 81, whereby the changeover to the shift stage corresponding to the shift operation or the changeover to the neutral state (i.e., the state in which the torque cannot be transmitted between the input shaft 41 and the output shaft 42) is executed.

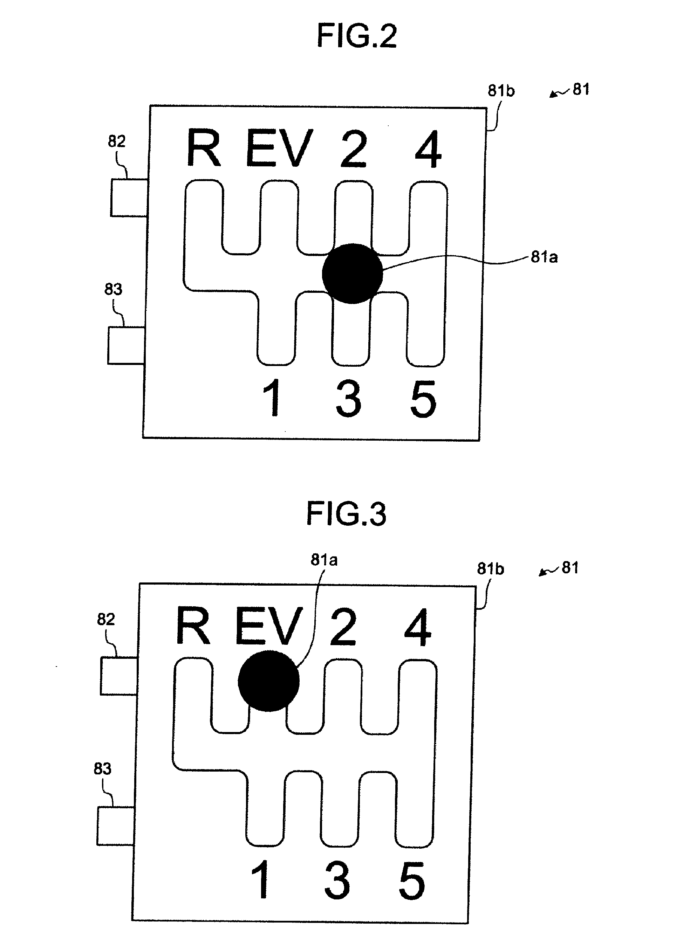

The shift operation apparatus 81 includes a shift lever 81a that is used when the driver performs the shift operation, a so-called shift gauge 81b that guides the shift lever 81a to the respective shift stages, and the above-mentioned link mechanism and fork, as illustrated in FIG. 2. FIG. 2 illustrates the position of the shift lever 81a when the manual transmission 30 is operated to the neutral state. The numbers "1 to 5" and "R" on the shift gauge 81b in FIG. 2 respectively indicate the shift positions (select positions) of the first-speed gear stage 31 to the fifth-speed gear stage 35 and the reverse gear stage 39.

In the hybrid vehicle 1 described above, there are at least three modes prepared as a driving mode of a power source, which are an engine driving mode for generating driving force on the driving wheels WL and WR only by the output from the engine 10, an EV driving mode for generating driving force on the driving wheels WL and WR only by the output from the motor/generator 20 serving as a motor, and a hybrid driving mode for generating driving force on the driving wheels WL and WR by both outputs from the engine 10 and the motor/generator 20.

In the description below, a driver's required driving force to the hybrid vehicle 1 according to the operation amount of an accelerator pedal 91 is referred to as a required vehicle driving force, and the driving force actually exerted on the hybrid vehicle 1 is referred to as an actual vehicle driving force. The driving force exerted on the hybrid vehicle 1 by the engine torque is referred to as engine vehicle driving force, and the driving force exerted on the hybrid vehicle 1 by the motor torque (motor power driving torque or motor regenerative torque) is referred to as motor vehicle driving force.

In the hybrid vehicle 1 according to the present embodiment, the engine driving mode or the hybrid driving mode is selected when the shift lever 81a is located on any one of the shift positions 1 to 5 and R on the shift gauge 81b.

On the other hand, when the EV driving mode is selected, an EV driving mode changeover apparatus operated by the driver is utilized in the hybrid vehicle 1. The EV driving mode changeover apparatus may be an operation device such as a switch provided in a compartment, but here, the function as the EV driving mode changeover apparatus is given to the shift operation apparatus 81. Specifically, the shift operation apparatus 81 in the present embodiment not only allows the driver to change the shift stage of the manual transmission 30, but also functions as the EV driving mode changeover apparatus when the driver changes the mode to the EV driving mode. For example, the shift operation apparatus 81 is provided with an EV driving mode selecting position EV, which is the select position of the shift lever 81a like the shift positions 1 to 5 and R, for changing the mode to the EV driving mode, on the shift gauge 81b. In the hybrid vehicle 1 according to the present embodiment, when the shift lever 81a is operated to the EV driving mode selecting position EV as illustrated in FIG. 3, the manual transmission 30 is brought into the neutral state by the sleeve and the like, and the driving mode is changed to the EV driving mode.

The shift operation apparatus 81 is provided with an EV driving mode selecting position detecting unit 82 for detecting whether the shift lever 81a is located on the EV driving mode selecting position EV or not. The EV driving mode selecting position detecting unit 82 is, for example, a position information detecting sensor that can detect that the shift lever 81a is located on the EV driving mode selecting position EV illustrated in FIG. 3. Therefore, when the driver moves the shift lever 81a to the EV driving mode selecting position EV, the EV driving mode selecting position detecting unit 82 detects the shift lever 81a located on the EV driving mode selecting position EV in the shift operation apparatus 81. The detection signal is transmitted to the electronic control unit (hereinafter referred to as "hybrid ECU") 100 for integrally controlling the operation of the whole vehicle.

The hybrid ECU 100 can receive and send detection signals of various sensors and information such as a control instruction from and to the engine ECU 101 and the motor/generator ECU 102. In the present embodiment, the vehicle control apparatus is composed of at least the hybrid ECU 100, the engine ECU 101, and the motor/generator ECU 102.

The shift operation apparatus 81 is also provided with a shift position detecting unit 83 for detecting on which one of the shift positions 1 to 5 and R on the shift gauge 81b the shift lever 81a is located, i.e., for detecting which one of the shift stages the driver selects. The shift position detecting unit 83 may be realized by utilizing a position information detecting sensor that can detect on which shift positions 1 to 5 and R the shift lever 81a is located. The detection signal is transmitted to the hybrid ECU 100. The hybrid ECU 100 is provided with a shift stage detecting unit 100b. The shift stage detecting unit 100b determines the shift stage selected by the driver and the current shift stage based upon the detection signal. For the sake of convenience, the shift position detecting unit 83 is illustrated as a different member from the EV driving mode selecting position detecting unit 82. However, they are replaced by a shift lever position detecting unit (not illustrated) formed by combining these units. The shift stage detecting unit 100b may be a known estimating unit that estimates the current shift stage from the engine torque output from the engine 10 or the wheel speed.

As described above, in the hybrid vehicle 1 according to the present embodiment, when the driver operates the shift operation apparatus 81, the changeover between the engine driving mode or the hybrid driving mode and the EV driving mode is executed.

When the shift lever 81a is operated on the shift positions 1 to 5 and R, a driving mode changeover unit 100a in the hybrid ECU 100 executes the determination as to the changeover between the engine driving mode and the hybrid driving mode. The driving mode changeover unit 100a executes the changeover between the engine driving mode and the hybrid driving mode based upon a driver's driving request (required vehicle driving force) calculated by a drive request calculating unit 100c in the hybrid ECU 100, information of state of charge (SOC amount) of the secondary battery 25 transmitted from the motor/generator ECU 102, and information about the vehicle running state (information about a vehicle lateral acceleration detected by an unillustrated vehicle lateral acceleration detecting unit, information about a slip state of the driving wheels WL and WR detected by a wheel slip detecting unit).

When the engine driving mode is selected, the driving mode changeover unit 100a sends a control instruction to the engine ECU 101 and the motor/generator ECU 102 in order to generate the required vehicle driving force only by the engine torque. In this case, the information of the engine torque that satisfies the requested vehicle driving force with the current shift stage or the shift stage after the shift operation is transmitted as the control instruction to the engine ECU 101, for example. Thus, the engine ECU 101 controls the fuel injection amount of the engine 10 so as to generate the engine torque. On the other hand, the driving mode changeover unit 100a sends the control instruction to the motor/generator ECU 102 in order not to operate the motor/generator 20 as the motor and the generator.

On the other hand, when the hybrid driving mode is selected, the driving mode changeover unit 100a sends the control instruction to the engine ECU 101 and the motor/generator ECU 102 in order to generate the requested vehicle driving force with the engine torque and the output of the motor/generator 20 as the motor or the generator. In this case, when the engine torque and the motor power driving torque are both used, the information of the engine torque and the motor power driving torque that satisfy the requested vehicle driving force with the current shift stage or the shift stage after the shift operation is respectively transmitted as the control instruction to the engine ECU 101 and the motor/generator ECU 102. Thus, the engine ECU 101 controls the engine 10 so as to generate the engine torque, and the motor/generator ECU 102 controls the feed amount to the motor/generator 20 so as to generate the motor power driving torque. When the regeneration of electric power is made by the motor/generator 20, it sends the control instruction to the motor/generator ECU 102 for allowing the motor/generator 20 to function as the generator. In this case, the information of the engine torque increased by the amount corresponding to the motor regenerative torque is sent to the engine ECU 101, for example.

When the shift lever 81a is operated on the EV driving mode selecting position EV, the driving mode changeover unit 100a sends the control instruction to the engine ECU 101 and the motor/generator ECU 102 in order to generate the requested vehicle driving force only by the motor power driving torque. In this case, the information of the motor power driving torque that satisfies the requested vehicle driving force is sent as the control instruction to the motor/generator ECU 102. Thus, the motor/generator ECU 102 controls an inverter 26 so as to generate the motor power driving torque. In this case, it is desirable to send the control instruction for stopping the operation of the engine 10 to the engine ECU 101 in order to enhance the fuel consumption performance. When the driver issues a request of reducing the speed of the vehicle by the brake operation, the control instruction for making it possible to execute the regenerative braking may be transmitted to the motor/generator ECU 102 in the EV driving mode.

When the changeover from the engine driving mode or the hybrid driving mode to the EV driving mode is requested by the driver's operation on the EV driving mode changeover apparatus (shift operation apparatus 81), the driving mode changeover unit 100a receives the detection signal from the EV driving mode selecting position detecting unit 82 so as to determine the changeover. The driving mode changeover unit 100a performs the control in the EV driving mode.

On the other hand, when the driving mode is changed from the EV driving mode to the engine driving mode or the hybrid driving mode, the manual operation by the driver leads to the operation of the driving mode changeover unit 100a as described above. In this case, the driver firstly releases his/her foot from the accelerator pedal 91 to turn off the accelerator (accelerator opening = 0), and brings the clutch 50 into the release state (clutch release) by the depressing operation of the clutch pedal 51. Then, the driver operates the shift lever 81a from the EV driving mode selecting position EV to the shift position corresponding to the desired shift stage (any one of the shift positions 1 to 5 for the forward traveling, and the shift position R for the reverse traveling), and releases his/her foot from the clutch pedal 51 to bring the clutch 50 into the engagement state (clutch engagement). With this operation, the changeover from the EV driving mode to the engine driving mode or the hybrid driving mode is completed, whereby positive actual vehicle driving force by the positive motor vehicle driving force according to the engine vehicle driving force and the motor power driving torque is generated. Thereafter, the driver performs the shift operation, such as the depressing operation of the accelerator pedal 91, same as that in a general vehicle provided with the manual transmission. The "positive" here means the direction of force in the vehicle advancing direction, i.e., means the acceleration direction. The "negative" here means the direction of force reverse to the vehicle advancing direction, i.e., means the deceleration direction.

During the changeover from the EV driving mode to the engine driving mode or the hybrid driving mode, the hybrid ECU 100 sends the instruction to the engine ECU 101 in order to start the engine 10, which is stopped, by the time when the clutch 50 is engaged at the latest. However, even when the engine 10 is started at the earliest stage, the engine torque output from the engine 10 is not transmitted to the driving wheels WL and WR, after all, until the engagement of the clutch 50 is started. Therefore, the engine vehicle driving force cannot be produced during the changeover to the engine driving mode.

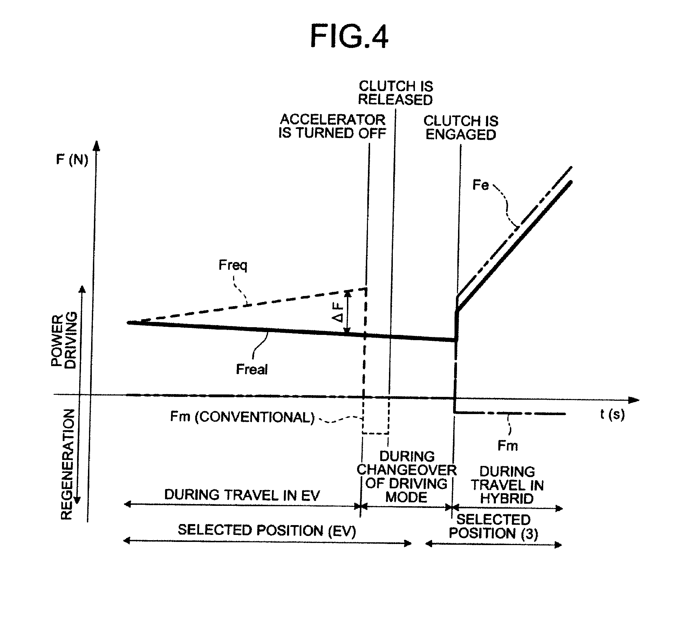

When it is detected that the accelerator is turned off in the EV driving mode in the hybrid vehicle 1, it is set such that the motor/generator 20 is driven for regeneration if the SOC amount is not more than a predetermined amount, and if the SOC amount exceeds the predetermined amount, the motor/generator 20 is driven neither for power driving nor regeneration, or driven for regeneration according to need. This is the same as the conventional technique. Therefore, in the conventional EV driving mode, when the accelerator is turned off even if the mode is changed to the engine driving mode or the hybrid driving mode, the motor/generator 20 is not driven for power driving, so that the positive motor vehicle driving force cannot be generated. When the motor/generator 20 is driven for the regeneration, the negative vehicle driving force that generates the deceleration is rather exerted on the hybrid vehicle 1. For example, FIG. 4 is a time chart illustrating the motor vehicle driving force Fm, the engine vehicle driving force Fe, the actual vehicle driving force Freal, and the requested vehicle driving force Freq upon the changeover from the EV driving mode to the hybrid driving mode when the SOC amount is reduced, wherein it illustrates the case in which the motor/generator 20 is changed from the power driving to the regenerative driving due to the off of the accelerator, which is indicated by a chain line, and when the clutch is disengaged, the motor/generator 20 is driven neither for the power driving nor for the regenerative driving (i.e., Fm = 0). Therefore, in the conventional case, when the changeover operation from the EV driving mode to the engine driving mode or to the hybrid driving mode is started due to the off of the accelerator, the actual vehicle driving force Freal changes from the positive value due to the positive motor vehicle driving force Fm so far to 0 or negative value. Thereafter, when the changeover is completed, the positive actual vehicle driving force Freal due to the engine vehicle driving force Fe is generated, if the hybrid ECU 100 selects the engine driving mode, while if it selects the hybrid driving mode, the positive actual vehicle driving force Freal due to the engine vehicle driving force Fe and the positive or negative motor vehicle driving force Fm is generated.

As described above, the positive actual vehicle driving force Freal cannot be generated by either the engine 10 and the motor/generator 20 during the changeover from the EV driving mode to the engine driving mode or the hybrid driving mode in the conventional case, so that a lack of driving force occurs in the hybrid vehicle after the accelerator is turned off. Further, since the lack of driving force occurs when the accelerator is turned off, and the actual vehicle driving force Freal, which assumes 0 or a negative value, is changed to the positive value with the start of the engagement of the clutch, a shock involved with the variation in the actual vehicle driving force Freal is also generated. In particular, in the illustration of the conventional case in FIG. 4, the actual vehicle driving force Freal is changed from a positive value to a negative value due to the generation of the regenerating braking force, and then, changed to 0 from the negative value with the disengagement of the clutch. Thereafter, it is changed from 0 to a positive value with the start of the engagement of the clutch. Therefore, a noticeable shock appears in this case.

In view of this, in the present embodiment, the control apparatus is configured to be capable of suppressing the occurrence of a lack of driving force and the generation of shock upon the changeover from the EV driving mode to the engine driving mode or to the hybrid driving mode.

In order to suppress the generation of the lack of driving force and the shock, the variation in the actual vehicle driving force Freal may be suppressed during the changeover of the driving mode. As described above, the engine vehicle driving force Fe cannot be generated during the changeover described above. Accordingly, the motor vehicle driving force Fm by the motor power driving torque generates the actual vehicle driving force Freal that can suppress the variation described above.

It is desirable that the actual vehicle driving force Freal that can suppress the variation is generated immediately after the accelerator is turned off. However, as described above, when the driver turns off the accelerator during the traveling in the EV driving mode, the motor/generator 20 is driven for the regenerative driving according to the SOC amount, but not for the power driving. Therefore, it has to be determined that the driver's action is a simple accelerator-off operation in the EV driving mode or the accelerator-off operation for performing the changeover from the EV driving mode to the engine driving mode or to the hybrid driving mode.

Accordingly, the control apparatus is configured to be capable of estimating the driver's intention (in other words, the intention of starting the engine 10, which is stopped, to continue traveling) of the changeover from the EV driving mode to the engine driving mode or to the hybrid driving mode. The hybrid ECU 100 is provided with an intention estimating unit 100d for making the estimation.

The case in which the driver changes the mode from the EV driving mode to the engine driving mode or to the hybrid driving mode can be classified into the case where the driver changes according to his/her determination and the case where the driver who determines that the changeover is needed according to the request from the vehicle changes.

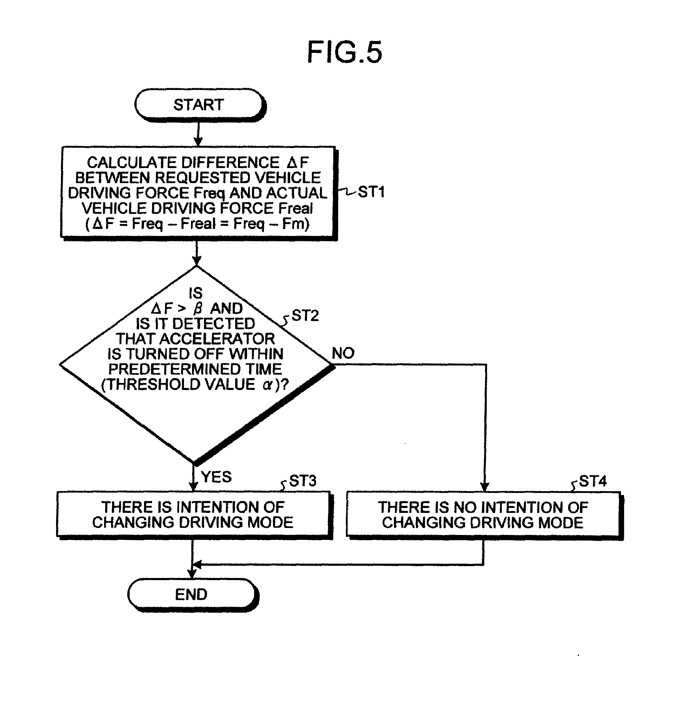

The former case is specifically the case in which the actual vehicle driving force Freal is insufficient with respect to the driver's requested vehicle driving force Freq. For example, when the maximum output of the motor/generator 20 is reduced due to the reduction in the SOC amount or the temperature of the motor/generator 20, the motor/generator 20 cannot output the motor power driving torque, which is for generating the actual vehicle driving force Freal (= motor vehicle driving force Fm) according to the requested vehicle driving force Freq, whereby the difference ΔF is started to be generated between the requested vehicle driving force Freq and the actual vehicle driving force Freal, as illustrated in FIG. 4. When the difference ΔF increases, the driver feels an unexpected lack of driving force, regardless of the demand of the driver for the great requested vehicle driving force Freq, whereby the driver can expect the changeover from the EV driving mode to the engine driving mode or to the hybrid driving mode in order to drive with greater force. When the lack of driving force is generated on a climbing lane, in particular, the driver might feel a strong sense of strangeness. Therefore, it is considered that the possibility that the driver makes the changeover of the driving mode is increased. In this case, the intention estimating unit 100d executes the estimating operation as illustrated in the flowchart in FIG. 5.

Firstly, the intention estimating unit 100d acquires the difference ΔF (= Freq - Freal) between the requested vehicle driving force Freq and the actual vehicle driving force Freal (step ST1). The intention estimating unit 100d calculates the requested vehicle driving force Freq based upon the detection signal from a detecting unit 92 that detects the operation amount and the opening of the accelerator pedal 91, for example. On the other hand, the actual vehicle driving force Freal may be estimated from the wheel speed of the driving wheels WL and WR, but in the EV driving mode, it has the magnitude same as that of the motor vehicle driving force Fm in the EV driving mode. Therefore, the intention estimating unit 100d calculates the actual vehicle driving force Freal from the requested value (requested motor power driving torque Tmreq) transmitted from the hybrid ECU 100 to the motor/generator ECU 102 and the gear ratio of the power transmission device.

The driver feels a sense of strangeness of the lack of driving force in the state in which the difference ΔF exceeds a certain magnitude, so that he/she has an intention of changing the mode to the engine driving mode or to the hybrid driving mode. Therefore, the intention estimating unit 100d may detect the state, and estimate that the driver has the intention of the changeover, when the accelerator is turned off. However, the changeover is left to the driver, and the driver does not always make the changeover of the driving mode, although the difference ΔF exceeds a certain magnitude. Therefore, in the present embodiment, if the accelerator becomes the off-state before a predetermined time (threshold value α) has elapsed after the above-mentioned state is established, it is determined that there is the intention of changing the driving mode, and if the predetermined time (threshold value α) has elapsed after the above-mentioned state is established, it is determined that there is no intention of changing the driving mode.

Therefore, the intention estimating unit 100d determines whether or not the accelerator-off state is detected or not within the predetermined time (threshold value α) after the state in which the obtained difference ΔF exceeds a predetermined threshold value β (step ST2). The threshold value α is the time required at least from when the difference ΔF exceeds the predetermined threshold value β to when the accelerator is turned off, and it is set to be longer than the time taken for the driver's recognition of the lack of driving force and the operation for the accelerator pedal 91. The threshold value β may be set to be the difference ΔF at the point when the driver can apparently recognize the lack of driving force, for example.

When the intention estimating unit 100d makes a positive determination in the step ST2, it determines that the driver has an intention of changing the driving mode from the EV driving mode to the engine driving mode or to the hybrid driving mode (step ST3), while when it makes a negative determination in the step ST2, it determines that the driver has no intention described above (step ST4).

The intention estimating unit 100d repeatedly executes the above-mentioned intention estimating operation during the travel in the EV driving mode.

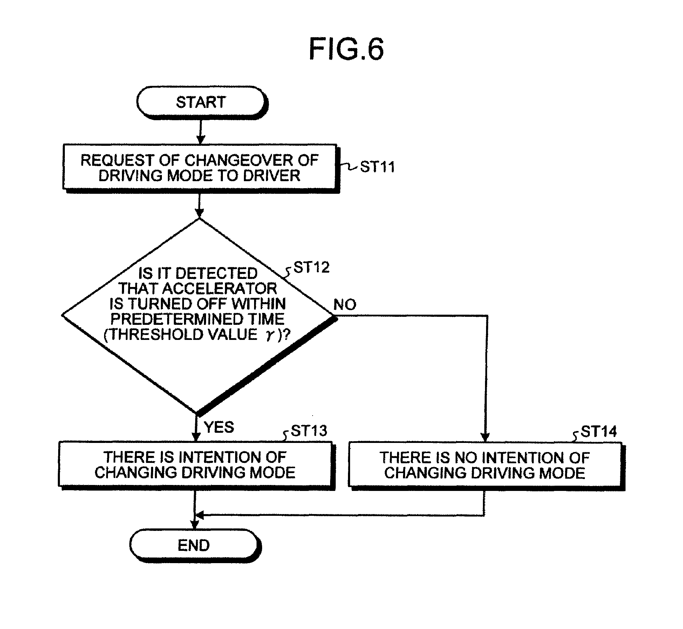

The latter case will next be described. For example, not only when the lack of driving force to the degree in which the driver can recognize is generated, but also even when the lack of driving force described above is not generated, there may be the case in which the vehicle does not wish to keep the travel in the EV driving mode, as in the case when the SOC amount is reduced. In this case, it is desirable that the vehicle requests to the driver the changeover from the EV driving mode to the engine driving mode or to the hybrid driving mode. The request of the changeover of the driving mode may be made by making an alarm sound in a compartment or by the display on an instrument panel or a monitor. Since an object is to generate the engine vehicle driving force Fe, the request may be made by starting the engine 10 in order to send the sound or vibration to the driver. Since the manual transmission 30 is in the neutral state, the engine torque is not transmitted to the output shaft 42 even if the engine 10 is started, so that the actual vehicle driving force Freal involved with the start does not vary. Since the request of the changeover of the driving mode is made from the vehicle side, it can be estimated that the driver changes the driving mode from the EV driving mode to the engine driving mode or to the hybrid driving mode according to the request. When the difference ΔF between the requested vehicle driving force Freq and the actual vehicle driving force Freal is increased, and hence, the driver feels the unexpected lack of driving force, in particular, it is considered that the possibility the driver makes the changeover of the driving mode according to the request from the vehicle is increased. In this case, the intention estimating unit 100d executes the estimating operation as illustrated by a flowchart in FIG. 6.

When the request of the changeover of the driving mode to the driver is issued (step ST11), the intention estimating unit 100d determines whether the accelerator-off state is detected or not within a predetermined time (threshold value γ) from the issuance (step ST12). When the intention estimating unit 100d makes a positive determination in the step ST12, it determines that the driver has an intention of changing the driving mode from the EV driving mode to the engine driving mode or to the hybrid driving mode (step ST13), and when it makes a negative determination in the step ST12, it determines that the driver does not have the intention (step ST14). The threshold value γ is the same type as the threshold value α. For example, the threshold value y is a time required from when the request of the changeover of the driving mode to the driver is issued to when the accelerator is turned off, and it is set to be longer than the time taken for the driver to recognize the request from the vehicle and to operate the accelerator pedal 91.

The intention estimating unit 100d executes the above-mentioned intention estimating operation, every time the request of the changeover of the driving mode is issued.

In this example, the request for the changeover of the driving mode is indicated as information (changeover guiding information) that excites the auditory sense or the visual sense in order to allow the driver to perform the changeover of the driving mode at an early stage. The changeover guiding information may be those described below. For example, when the changeover from the EV driving mode is not needed immediately even if the SOC amount is reduced, the changeover guiding information promoting the driver to perform the changeover from the EV driving mode may be displayed together with the estimated remaining running distance in the EV driving mode, before the running distance reaches the estimated running distance.

When the intention estimating unit 100d determines that the driver has the intention of changing the driving mode as described above, the driving mode changeover unit 100a generates the actual vehicle driving force Freal, which can suppress the above-mentioned variation, during the changeover operation of the driving mode. The driving mode changeover unit 100a executes to set the requested vehicle driving force Freq (requested value of the motor vehicle driving force Fm) satisfying the actual vehicle driving force Freal and to set the requested motor power driving torque Tmreq generating the requested vehicle driving force Freq, thereby giving an instruction to the motor/generator ECU 102 to output the requested motor power driving torque Tmreq.

The requested vehicle driving force Freq (requested value of the motor vehicle driving force Fm) is set to be not more than the previous requested vehicle driving force Freq (requested value of the motor vehicle driving force Fm) that is set immediately before the current one. This is because, when the requested vehicle driving force Freq is set to be greater than the previous one, acceleration is generated on the hybrid vehicle 1, but the driver feels a sense of strangeness when the vehicle accelerates with the state in which the accelerator is turned off.

For example, when the actual vehicle driving force Freal is decreased before the accelerator is turned off as illustrated in FIG. 4, the requested vehicle driving force Freq (requested value of the motor vehicle driving force Fm) may be set to be equal to the magnitude for keeping the gradient of the decrease or to the requested vehicle driving force Freq (requested value of the motor vehicle driving force Fm) upon the accelerator-off state. For example, when the gradient of the decrease is not changed, the sense of strangeness is eliminated. In this case, it may be set such that the gradient is increased more than the gradient of the decrease (i.e., the decrease in the actual vehicle driving force Freal per hour is increased more than that before the accelerator is turned off). With this, the amount corresponding to the deceleration due to the accelerator-off is considered, whereby the sense of strangeness is further eliminated.

On the other hand, when the actual vehicle driving force Freal is increased or becomes constant before the accelerator is turned off, the requested vehicle driving force Freq (requested value of the motor vehicle driving force Fm) at the time when the accelerator is turned off may be maintained, whereby the sense of strangeness is eliminated. In this case, a value for gradually decreasing from the requested vehicle driving force Freq (requested value of the motor vehicle driving force Fm) upon the accelerator-off may be set. With this, the amount corresponding to the deceleration due to the accelerator-off is considered, whereby the sense of strangeness is further eliminated.

The driving mode changeover unit 100a sets the requested motor power driving torque Tmreq(n) to be not more than the previous requested motor power driving torque Tmreq(n-1) (n = 1, 2, 3, ...) that is set immediately before the current one by using the idea of setting the requested vehicle driving force Freq (requested value of the motor vehicle driving force Fm) for the setting of the requested motor power driving torque Tmreq without making any changes. Therefore, when the actual motor power driving torque Tmreal is decreased before the accelerator is turned off, for example, the requested motor power driving torque Tmreq may be set to have the magnitude same as the magnitude that keeps the gradient of the decrease or the magnitude of the requested motor power driving torque Tmreq when the accelerator is turned off. In this case, the requested motor power driving torque Tmreq may be set such that the gradient is increased more than the gradient of the decrease (i.e., the decrease in the requested motor power driving torque Tmreq per hour is increased more than that before the accelerator is turned off). When the actual motor power driving torque Tmreal is increased or becomes constant before the accelerator is turned off, the requested motor power driving torque Tmreq upon the accelerator-off state may be kept. In this case, a value for gradually decreasing from the requested motor power driving torque Tmreq upon the accelerator-off may be set.

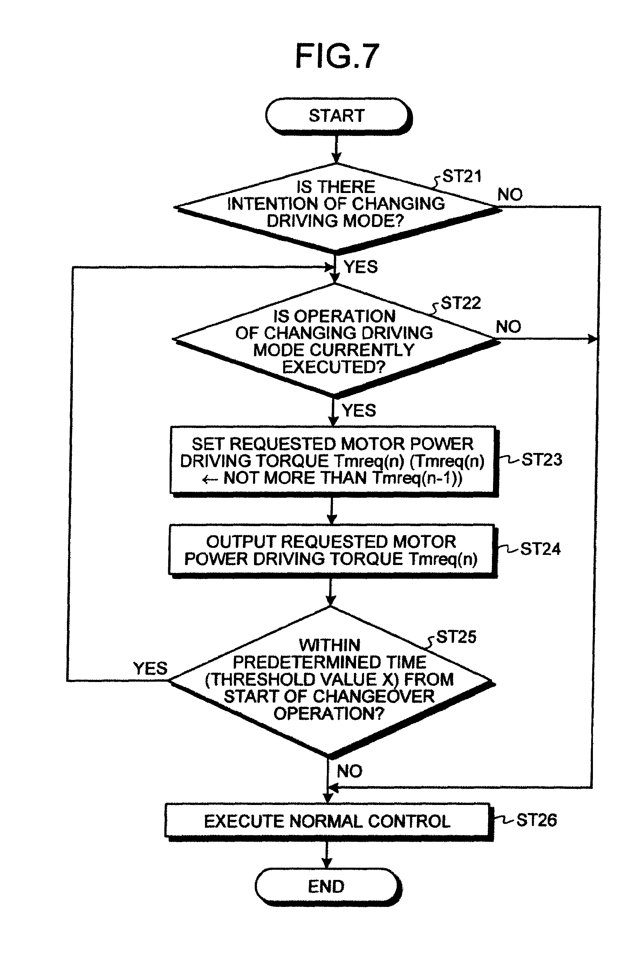

The control operation of the driving mode changeover unit 100a will be described with reference to the flowchart in FIG. 7.

The driving mode changeover unit 100a checks the result of the determination about the driver's intention of changing the driving mode by the intention estimating unit 100d (step ST21).

If the determination is such that there is no intention of the changeover, the driving mode changeover unit 100a determines that the normal control in step ST26 is executed. In this case, the running control in the EV driving mode is continued in the step ST26.

On the other hand, if the determination result is such that there is the intention of the changeover, the driving mode changeover unit 100a determines whether the changeover operation from the EV driving mode to the engine driving mode or to the hybrid driving mode is currently executed or not (step ST22).

When the accelerator pedal 91 is depressed, when the clutch 50 is not operated, or when the clutch 50 is completely engaged, for example, it is determined that the changeover operation of the driving mode is not currently executed in the step ST22, so that it is determined that the normal control in the step ST26 is executed. Whether the clutch 50 is operated or not or whether the clutch 50 is completely engaged or not may be determined by checking the change in the wheel speed of the driving wheels WL and WR, for example. When it is determined that the changeover operation of the driving mode is not currently executed because the accelerator pedal 91 is depressed, it is determined that the changeover of the driving mode is not made, so that the running control in the EV driving mode is continued in the step ST26. When it is determined that the operation of changing the driving mode is not currently executed because the clutch 50 is not operated with the accelerator being turned off, the motor/generator 20 is driven for regeneration when the accelerator is turned off with the EV driving mode as described above.

On the other hand, when the accelerator is kept to be turned off or before the clutch is completely engaged in the step ST22, it is determined that the operation of changing the driving mode is currently executed. When this determination is made, the driving mode changeover unit 100a sets the above-mentioned requested motor power driving torque Tmreq(n) (step ST23), and gives an instruction to the motor/generator ECU 102 to output the resultant (step ST24). Accordingly, the motor/generator ECU 102 allows the motor/generator 20 to output the requested motor power driving torque Tmreq(n), thereby generating the actual vehicle driving force Freal by the motor vehicle driving force Fm according to the requested motor power driving torque Tmreq(n).

After issuing the instruction of the output, the driving mode changeover unit 100a determines whether a predetermined time (threshold value X) has elapsed from the start of the changeover operation of the driving mode or not (step ST25). The threshold value X is set considering the time required for the changeover operation of the driving mode. For example, it may be set to the operation time for the changeover of the average driver (the time from when the clutch is turned off to when the clutch is completely engaged) or the time obtained by adding various operation amounts depending upon the driver.

Before the predetermined time has elapsed or until it is determined in the step ST22 that the operation of changing the driving mode is not currently executed, the driving mode changeover unit 100a repeats to set and output the requested motor power driving torque Tmreq(n). Thus, in the hybrid vehicle 1, the actual vehicle driving force Freal (= motor vehicle driving force Fm) according to the motor power driving torque Tm keeps on being output during the operation of changing the driving mode without having a great variation (e.g., FIG. 4), whereby the lack of driving force and generation of shock during this operation can be suppressed. Accordingly, the driver's sense of strangeness can be eliminated. During the operation of changing the driving mode, the accelerator keeps on getting turned off, so that the requested vehicle driving force Freq is 0.

It may be determined in the step ST22 that the operation of changing the driving mode is ended when the clutch 50, which is disengaged, is completely engaged, so as to determine that the operation of changing the driving mode is not currently executed. In this case, the running control in the engine driving mode or in the hybrid driving mode is to be executed in the step ST26. However, when the determination is made based upon the change in the wheel speed of the driving wheels WL and WR, a trouble might occur in the precision of the estimation as to whether the clutch is completely engaged or not. Therefore, it is desirable that the determination as to whether the operation of changing the driving mode is ended or not is made based upon the determination in the step ST25. Specifically, when the predetermined time (threshold value X) has elapsed in the step ST25, it may be determined that the operation of changing the driving mode is ended, and the normal control may be executed (step ST26). In this case, the control is returned to the normal control from the driving mode changeover control, so that the running control in the engine driving mode or in the hybrid driving mode is started.

In general, a driver for a vehicle provided with a manual transmission starts the depressing operation of the accelerator pedal 91 simultaneous with the operation of engaging the clutch 50. Therefore, in the normal control, the requested vehicle driving force Freq increases more than 0 with the engagement of the clutch, and increases every time the depressing operation amount of the accelerator pedal 91 increases, as illustrated in FIG. 4. In the example in FIG. 4, the SOC amount is reduced, so that the requested value for the engine vehicle driving force Fe is set to be greater than the requested vehicle driving force Freq and sets the negative motor vehicle driving force Fm according to the motor regenerative torque by the increased amount, in order to regenerate electric power.

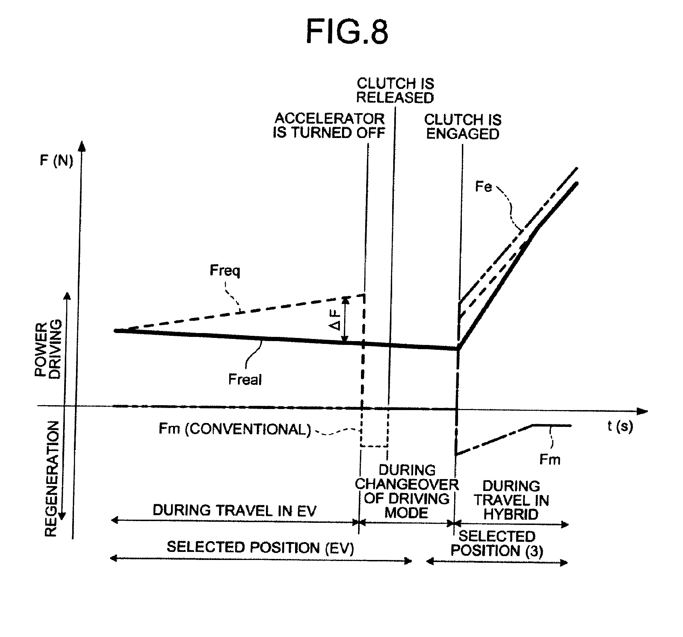

In FIG. 4, when the control is returned to the normal control from the driving mode changeover control (when the clutch is engaged), the requested vehicle driving force Freq is increased more than the actual vehicle driving force Freal so far. Therefore, when the difference between them is increased, the change of the actual vehicle driving force Freal becomes sharp, whereby a shock might be generated. Accordingly, when the control is returned to the normal control, it is preferable that the actual vehicle driving force Freal is gradually increased from the previous one, regardless of the requested vehicle driving force Freq, in order not to cause a sharp change in the actual vehicle driving force Freal, as illustrated in FIG. 8. In this case, the actual vehicle driving force Freal is agreed with the requested vehicle driving force Freq as gradually being increased. As described above, the control is gradually returned to the normal control as being moderated, whereby the generation of the shock can be prevented.

The time required for the operation of changing the driving mode is different depending upon a driver. Therefore, in the example described above, the threshold value X is set based upon the changeover operation time of an average driver. However, it is rare that the time for the actual changeover operation agrees with the changeover operation time of the average driver. Accordingly, there may be the case in which the control is returned to the normal control, although the driver is executing the operation of changing the driving mode, or the case in which the driving mode changeover control is continued, although the driver ends the operation of changing the driving mode, and starts to depress the accelerator pedal 91. In the former case, a sharp change might be caused such as the actual vehicle driving force Freal is decreased, regardless of the driver's intention. However, even in this case, the actual vehicle driving force Freal may gradually be decreased from the previous one during the operation of changing the driving mode as described above, whereby the sharp change in the actual vehicle driving force Freal can be suppressed. In the latter case, a deviation is produced between the requested vehicle driving force Freq according to the operation of depressing the accelerator pedal 91 and the actual vehicle driving force Freal, so that a sense of strangeness is given to the driver. However, even if it is determined that the predetermined time (threshold value X) has not elapsed in the step ST25, the negative determination is made in the step ST22 due to the operation of depressing the accelerator pedal 91, and the processing proceeds to the step ST26 where the control is returned to the normal control, resulting in that the sense of strangeness described above is not given to the driver. When some time (e.g., time close to the predetermined time (threshold value X)) has elapsed after the start of the operation of changing the driving mode, it is determined in the step ST22 that the operation of changing the driving mode is ended when the accelerator pedal 91 is depressed, so that the processing proceeds to the step ST26.

As described above, the control apparatus according to the present embodiment estimates that a driver has an intention of changing the driving mode from the EV driving mode to the engine driving mode or to the hybrid driving mode, and generates the actual vehicle driving force Freal with the positive motor vehicle driving force Fm according to the motor power driving torque during the changeover, thereby being capable of preventing the lack of driving force or the generation of shock during this operation.

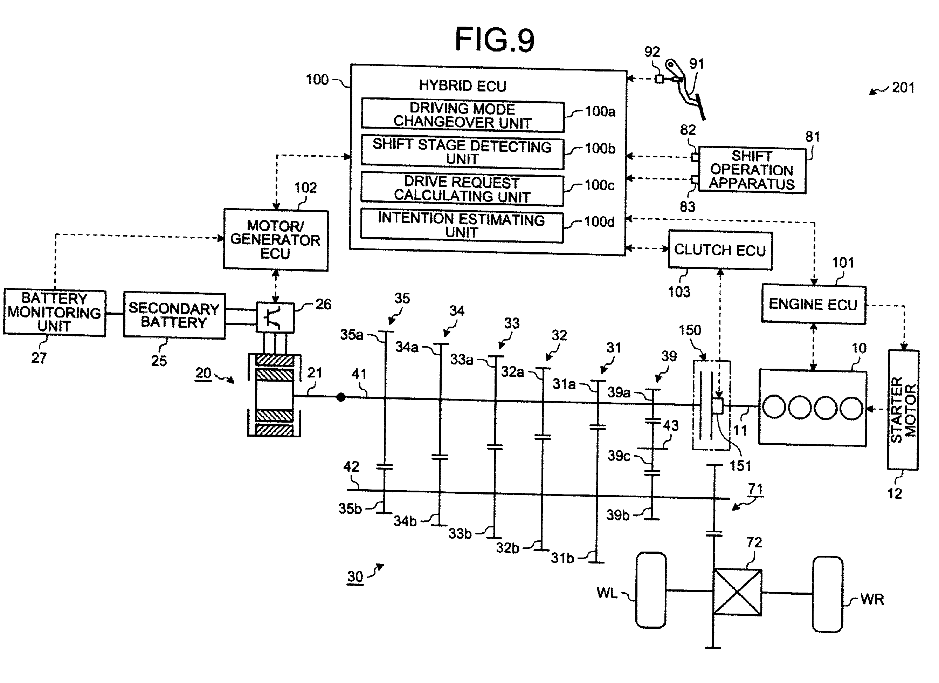

In the example described above, the driving mode changeover control is applied to the hybrid vehicle 1 in which the motor/generator 20 is connected to the output shaft 42 of the manual transmission 30. However, the driving mode changeover control can be applied to the one in which the motor/generator 20 is arranged close to the driving wheels WL and WR from the clutch 50. For example, a hybrid vehicle 201 illustrated in FIG. 9 is considered as one example.

In the hybrid vehicle 201, the output shaft 21 of the motor/generator 20 is coupled to the input shaft 41 of the manual transmission 30, with respect to the hybrid vehicle 1 in FIG. 1, wherein the motor power driving torque is shifted by any one of the shift stages (gear stages 31 to 35 and 39) to be transmitted to the output shaft 42. For example, the manual transmission 30 in the hybrid vehicle 201 is set such that the third-speed gear stage 33 is engaged when the shift lever 81a is operated to be located on the EV driving mode selecting position EV.

In the hybrid vehicle 201, a clutch 150 whose engagement operation and release operation are executed by an actuator 151 is provided instead of the clutch 50 that is engaged or released by the clutch operation of the driver. The actuator 151 is controlled by a clutch control unit in an electronic control unit 103 (hereinafter referred to as "clutch ECU") for the clutch 150, and it is operated by the driver's operation on the shift lever 81a. When the shift lever 81a is operated to be located on the shift positions 1 to 5 and R, i.e., when the detection signal of the shift position detecting unit 83 is received, the actuator 151 allows the clutch 150 to be in the engagement state by the instruction from the clutch ECU 103 through the hybrid ECU 100. When the shift lever 81a is operated in a predetermined amount from the shift positions 1 to 5 and R or is located on the neutral position, i.e., when the detection signal of the shift position detecting unit 83 is not received, and when the shift lever 81a is operated to be located on the EV driving mode selecting position EV, i.e., when the detection signal from the EV driving mode selecting position detecting unit 82 is received, the actuator 151 releases the clutch 150 according to the instruction from the clutch ECU 103 through the hybrid ECU 100. The reason why the clutch 150 is released in the EV driving mode is because, if the output shaft 11 of the engine 10 and the input shaft 41 of the manual transmission 30 are connected to each other, a load is generated to deteriorate the transmission efficiency of the motor power driving torque.

Even in the hybrid vehicle 201 thus configured, the effect same as described above can be obtained by applying the above-mentioned driving mode changeover control. The control manner is the same, so that the specific description will be skipped.

The driving mode changeover control may be applied to a vehicle having a configuration different from that of the hybrid vehicle 1 and the hybrid vehicle 201 described above. For example, the driving mode changeover control is applicable to a hybrid vehicle having an inwheel motor provided to a driving wheel, instead of the motor/generator 20 in the hybrid vehicles 1 and 201, and the same effect can be obtained.

### Industrial Applicability

As described above, the vehicle control apparatus according to the present invention is useful for a technique of suppressing a lack of driving force caused when a driving mode is changed from an EV driving mode to a driving mode using an engine, in a hybrid vehicle including a stepped manual transmission, and an apparatus for manually performing a changeover between the driving mode using the engine and the EV driving mode.

### Reference Signs List

1, 201 HYBRID VEHICLE
10 ENGINE
12 STARTER MOTOR
20 MOTOR/GENERATOR
25 SECONDARY BATTERY
27 BATTERY MONITORING UNIT
30 MANUAL TRANSMISSION
50, 150 CLUTCH
51 CLUTCH PEDAL
81 SHIFT OPERATION APPARATUS
81a SHIFT LEVER
81b SHIFT GAUGE
100 HYBRID ECU
100a DRIVING MODE CHANGEOVER UNIT
100d INTENTION ESTIMATING UNIT
101 ENGINE ECU
102 MOTOR/GENERATOR ECU
103 CLUTCH ECU
151 ACTUATOR

## Claims

1. A vehicle control apparatus comprising:
a mechanical power source (10) that generates driving force by using mechanical energy as power;
a manual transmission (30) to which an output of the mechanical power source (10) is input;
an electric power source (20) that generates driving force by using mechanical energy, which is formed by converting electric energy, as power; and
a shift operation apparatus (81) that includes shift positions for every shift stages in order to select the shift stage by the manual transmission (30) upon the travel in a driving mode using the output from the mechanical power source (10), and a driving mode selecting position of the electric power source (20) for selecting a driving mode in which the vehicle travels only with the output from the electric power source (20), and that operates the manual transmission (30) according to the shift position selected by a driver or the driving mode selecting position, **characterized in that** the vehicle control apparatus is configured so that,
when it is estimated that the changeover from the driving mode using only the output from the electric power source (20) to the driving mode using the output from the mechanical power source (10) is performed, the electric power source (20) is driven for power running to generate driving force, when an accelerator is turned off.

2. A vehicle control apparatus according to claim 1, configured so that
when it is estimated that the changeover from the driving mode using only the output from the electric power source (20) to the driving mode using the output from the mechanical power source (10) is performed, the electric power source (20) is driven for power running to generate driving force during the operation of changing the driving mode.

3. A vehicle control apparatus according to claim 1 or claim 2, configured so that
a clutch (50, 150) between the mechanical power source (10) and the manual transmission (30) is released during the operation of changing the driving mode.

4. A vehicle control apparatus according to claim 1, claim 2, or claim 3, configured so that
the estimation as to whether the changeover from the driving mode using only the output from the electric power source (20) to the driving mode using the output from the mechanical power source (10) is performed is made according to the difference between a requested vehicle driving force involved with an acceleration operation of a driver and an actual vehicle driving force according to the output from the electric power source (20).

5. A vehicle control apparatus according to claim 1, claim 2, or claim 3, configured so that
the estimation as to whether the changeover from the driving mode using only the output from the electric power source (20) to the driving mode using the output from the mechanical power source (10) is performed is made according to changeover guiding information that promotes the changeover of the driving mode to a driver from the vehicle.
